# EUROPEAN PATENT APPLICATION

(11) **EP 4 534 734 A1**
(43) Date of publication of application: **09.04.2025**
(21) Application number: 23839494.4
(22) Date of filing: 30.06.2023
(51) Int. Cl.: C25B 15/023, C25B 1/04, C25B 9/00

(54) **CONTROL DEVICE FOR HYDROGEN PRODUCTION APPARATUSES, HYDROGEN PRODUCTION FACILITY, METHOD FOR CONTROLLING HYDROGEN PRODUCTION APPARATUS, AND CONTROL PROGRAM FOR HYDROGEN PRODUCTION APPARATUSES**

(30) Priority: 11.07.2022 JP 2022111319
(71) Applicant: Mitsubishi Heavy Industries, Ltd., Tokyo 100-8332 (JP)
(72) Inventor: ICHINOSE, Hikaru, Tokyo 100-8332 (JP)
(74) Representative: Studio Torta S.p.A.
(86) International application number: PCT/JP2023/024468
(87) International publication number: WO 2024/014322

(57) **Abstract**

A control device for a hydrogen production apparatus is a control device for controlling operation of a hydrogen production apparatus and includes: an estimated reaching time calculation unit configured to calculate, on the basis of a change rate of a pressure of a storing unit for storing hydrogen produced by the hydrogen production apparatus, an estimated reaching time for the pressure of the storing unit to reach a specified value; a start-up time acquisition unit configured to acquire a start-up time of the hydrogen production apparatus in accordance with a state of the hydrogen production apparatus; and a determination unit configured to determine a start-up timing for starting up the hydrogen production apparatus on the basis of a comparison between the estimated reaching time and the start-up time.

## Description

### Technical Field

The present disclosure relates to a control device for a hydrogen production apparatus, a hydrogen production facility, a control method for a hydrogen production apparatus, and a control program for a hydrogen production apparatus.

The present application claims priority based on the Japanese Patent Application No. 2022-111319, filed with the Japan Patent Office on July 11, 2022, the content of which is incorporated herein by reference.

### Background Art

Devices using hydrogen as an energy source and techniques related to hydrogen production have been developed.

Patent Document 1 discloses a system for producing hydrogen by electrolyzing water in a water electrolyzer provided with a solid electrolyte membrane.

### Citation List

### Patent Literature

Patent Document 1: JP 2002-129372 A

### Summary of Invention

### Technical Problem

Incidentally, in order to stably supply hydrogen from a storing unit (storage header or the like) in which hydrogen produced by a hydrogen production apparatus is stored to a hydrogen consuming facility, it is necessary to maintain the pressure of the storing unit at a specified pressure or higher. Here, in order to maintain the pressure of the storing unit at the specified pressure or higher, it is conceivable to perform on-off operation of the hydrogen production apparatus based on the pressure of the storing unit, that is, to start and operate the hydrogen production apparatus when the pressure of the storing unit becomes a predetermined value or less, and to stop the operation of the hydrogen production apparatus when the pressure of the storing unit becomes the predetermined value or more.

However, when a hydrogen consumption rate in the hydrogen consuming facility is high, the pressure of the storing unit falls below the specified pressure before the start-up of the hydrogen production apparatus is completed, and hydrogen cannot be appropriately supplied to the hydrogen consuming facility. On the other hand, when the hydrogen consumption rate in the hydrogen consuming facility is low, the pressure of the storing unit has not been lowered so much at the completion of start-up of the hydrogen production apparatus (i.e., at the start of hydrogen production), and thus the amount of hydrogen that can be produced per one operation (i.e., per start-up) of the hydrogen production apparatus (the rise in the pressure of the storing unit) decreases, and the operation efficiency of the hydrogen production apparatus decreases.

In view of the above-described circumstances, an object of at least one embodiment of the present invention is to provide a control device for a hydrogen production apparatus, a hydrogen production facility, a control method for a hydrogen production apparatus, and a control program for a hydrogen production apparatus by which the hydrogen production apparatus can efficiently operate while appropriately supplying hydrogen.

### Solution to Problem

A control device for a hydrogen production apparatus according to at least one embodiment of the present invention is a control device for controlling operation of a hydrogen production apparatus and includes:
an estimated reaching time calculation unit configured to calculate, on the basis of a change rate of a pressure of a storing unit for storing hydrogen produced by the hydrogen production apparatus, an estimated reaching time for the pressure of the storing unit to reach a specified value;
a start-up time acquisition unit configured to acquire a start-up time of the hydrogen production apparatus in accordance with a state of the hydrogen production apparatus; and
a determination unit configured to determine a start-up timing for starting up the hydrogen production apparatus on the basis of a comparison between the estimated reaching time and the start-up time.

A hydrogen production facility according to at least one embodiment of the present invention includes:
a hydrogen production apparatus;
a storing unit for storing hydrogen produced by the hydrogen production apparatus; and
the above-described control device configured to control operation of the hydrogen production apparatus.

A control method for a hydrogen production apparatus according to at least one embodiment of the present invention is a control method for controlling operation of a hydrogen production apparatus and includes:
a step of calculating, on the basis of a change rate of a pressure of a storing unit for storing hydrogen produced by the hydrogen production apparatus, an estimated reaching time for the pressure of the storing unit to reach a specified value;
a step of acquiring a start-up time of the hydrogen production apparatus in accordance with a state of the hydrogen production apparatus; and
a step of determining a start-up timing for starting up the hydrogen production apparatus on the basis of a comparison between the estimated reaching time and the start-up time.

A control program for a hydrogen production apparatus according to at least one embodiment of the present invention is a control program for controlling operation of a hydrogen production apparatus and is configured to cause a computer to execute:
a step of calculating, on the basis of a change rate of a pressure of a storing unit for storing hydrogen produced by the hydrogen production apparatus, an estimated reaching time for the pressure of the storing unit to reach a specified value;
a step of acquiring a start-up time of the hydrogen production apparatus in accordance with a state of the hydrogen production apparatus; and
a step of determining a start-up timing for starting up the hydrogen production apparatus on the basis of a comparison between the estimated reaching time and the start-up time.

### Advantageous Effects of Invention

According to at least one embodiment of the present invention, a control device for a hydrogen production apparatus, a hydrogen production facility, a control method for a hydrogen production apparatus, and a control program for a hydrogen production apparatus by which the hydrogen production apparatus can efficiently operate while appropriately supplying hydrogen are provided.

### Brief Description of Drawings

FIG. 1 is a schematic diagram of a hydrogen production facility to which a control device according to an embodiment is applied.
FIG. 2 is a schematic diagram of a hydrogen production facility to which a control device according to an embodiment is applied.
FIG. 3 is a schematic configuration diagram of a control device according to an embodiment.
FIG. 4 is a flowchart of a control method for a hydrogen production apparatus according to an embodiment.
FIG. 5A is a graph showing a temporal change in pressure of a storing unit when a control method for a hydrogen production apparatus according to an embodiment is applied.
FIG. 5B is a graph showing a temporal change in pressure of a storing unit when a control method for a hydrogen production apparatus according to an embodiment is applied.
FIG. 6 is a graph showing a temporal change in pressure of a storing unit when a control method for a hydrogen production apparatus according to an embodiment is applied.
FIG. 7A is a graph showing an example of a temporal change in pressure of the storing unit when an on-off operation of a hydrogen production apparatus is performed on the basis of the pressure of the storing unit.
FIG. 7B is a graph showing an example of a temporal change in pressure of the storing unit when the on-off operation of a hydrogen production apparatus is performed on the basis of the pressure of the storing unit.

### Description of Embodiments

Embodiments of the present invention will be described in detail below with reference to the accompanying drawings. However, the dimensions, materials, shapes, relative arrangements, or the like of the components described as embodiments or illustrated in the drawings are not intended to limit the scope of the present invention but are merely illustrative examples.

### Configuration of Hydrogen Production Facility

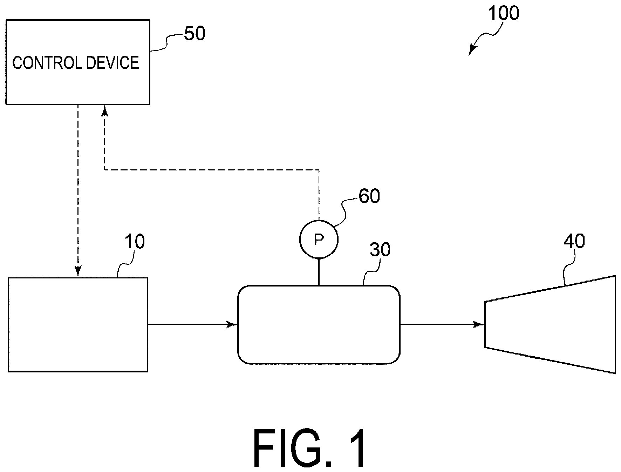

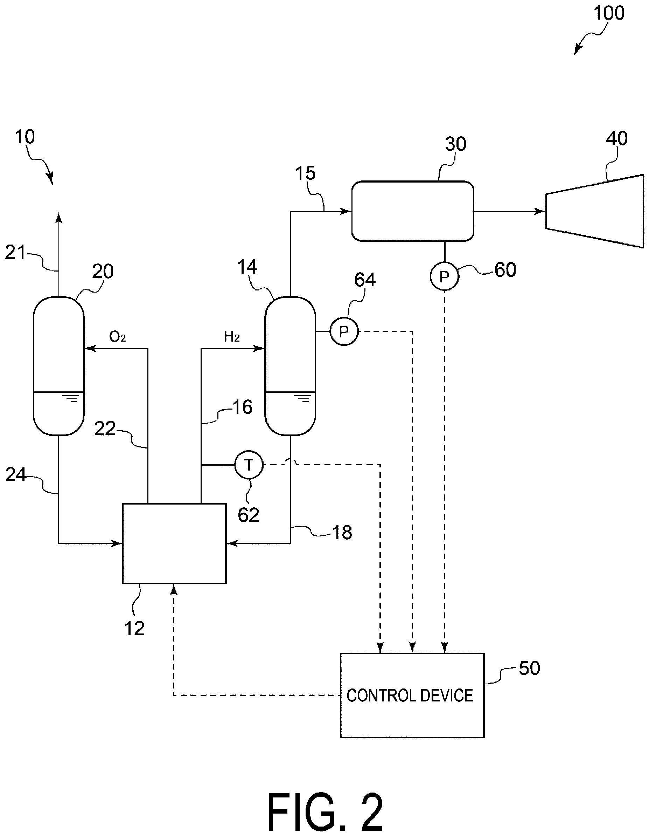

FIG. 1 and FIG. 2 are schematic diagrams of a hydrogen production facility to which a control device according to an embodiment is applied. As illustrated in FIG. 1 and FIG. 2, a hydrogen production facility 100 includes a hydrogen production apparatus 10 configured to produce hydrogen, a storing unit 30 for storing the hydrogen produced by the hydrogen production apparatus 10, and a control device 50 for controlling the operation of the hydrogen production apparatus 10.

Gaseous hydrogen is stored in the storing unit 30. The hydrogen stored in the storing unit 30 may be supplied to a hydrogen consuming facility 40. The storing unit 30 may have a feature suitable for supplying the hydrogen to the hydrogen consuming facility 40. The storing unit 30 may include, for example, a storage header (header tank).

The storing unit 30 may be provided with a pressure sensor 60 configured to measure a pressure of the storing unit 30. The pressure sensor 60 may be electrically connected to the control device 50, and a signal indicating a measurement result by the pressure sensor 60 may be transmitted to the control device 50.

The hydrogen consuming facility 40 is not particularly limited. The hydrogen consuming facility 40 may include, for example, a hydrogen combustion facility configured to burn hydrogen (e.g., a gas turbine facility or an iron manufacturing facility), a hydrogen liquefaction facility configured to liquefy hydrogen, a facility for generating electricity by a chemical reaction using hydrogen as a fuel (e.g., a power generation facility including a fuel cell such as a solid oxide fuel cell (SOFC)), a facility for producing fuel using hydrogen as a feedstock (e.g., a fuel synthesis facility), or a hydrogen gas station configured to supply hydrogen to a device.

The hydrogen production apparatus 10 may include a water electrolyzer configured to produce hydrogen by electrolysis of water. The type of water electrolyzer is not limited. The water electrolyzer may be, for example, an alkaline water electrolyzer, a polymer electrolyte membrane (PEM) water electrolyzer, an anion exchange membrane (AEM) water electrolyzer, or a solid oxide electrolysis cell (SOEC) water electrolyzer. Alternatively, the hydrogen production apparatus 10 may include a reformer configured to produce hydrogen by reforming a fossil fuel or the like, a plant in which hydrogen is secondarily generated, or the like.

The hydrogen production apparatus 10 illustrated in FIG. 2 includes a water electrolyzer including an electrolytic tank 12 for electrolyzing water. The water electrolyzer including the electrolytic tank 12 is supplied with water via a water supply line (not illustrated). The water supply line may be configured to supply water to, for example, a gas-liquid separator 14 or 20 to be described below. The water in the electrolytic tank 12 is electrolyzed by applying a voltage between a pair of electrodes provided in the electrolytic tank 12 to produce hydrogen on the cathode side and oxygen on the anode side. Water in which an electrolyte is dissolved (electrolyte solution) may be supplied into the electrolytic tank 12. The electrolyte may be an alkaline substance such as potassium hydroxide (KOH).

The hydrogen gas produced on the cathode side is guided to the gas-liquid separator 14 via a cathode-side line 16 in a state of containing water (electrolyte solution or the like). In the gas-liquid separator 14, the hydrogen gas containing water is separated into hydrogen gas and water. The hydrogen gas separated by the gas-liquid separator 14 is guided to the storing unit 30 via a hydrogen gas line 15. The water separated by the gas-liquid separator 14 is returned to the electrolytic tank 12 via a return line 18.

The oxygen gas generated on the anode side is guided to the gas-liquid separator 20 via an anode-side line 22 in a state of containing water (electrolyte solution or the like). In the gas-liquid separator 20, the oxygen gas containing water is separated into oxygen gas and water. The oxygen gas separated by the gas-liquid separator 20 is discharged from the gas-liquid separator 20 via an oxygen gas line 21. The oxygen gas discharged from the gas-liquid separator 20 may be supplied to an oxygen consuming facility or may be discharged to the outside. The water separated by the gas-liquid separator 20 is returned to the electrolytic tank 12 via a return line 24.

The hydrogen production apparatus 10 may be provided with a pressure sensor 64 configured to measure a pressure of the gas-liquid separator 14 or 20 to which the hydrogen or the oxygen from the electrolytic tank 12 is guided. In the exemplary embodiment illustrated in FIG. 2, the pressure sensor 64 is configured to measure the pressure of the gas-liquid separator 14. In another embodiment, the pressure sensor 64 may be configured to measure a pressure of the gas-liquid separator 20. The hydrogen production apparatus 10 may be provided with a temperature sensor 62 configured to measure a temperature of water (electrolyte solution or the like) in the hydrogen production apparatus 10. In the exemplary embodiment illustrated in FIG. 2, the temperature sensor 62 is configured to measure the temperature of the water in the cathode-side line 16. In another embodiment, the temperature sensor 62 may be configured to measure the temperature of the water in the return line 18, the anode-side line 22, or the return line 24. The pressure sensor 64 and the temperature sensor 62 may be electrically connected to the control device 50, and signals indicating measurement results by the pressure sensor 64 and the temperature sensor 62 may be transmitted to the control device 50.

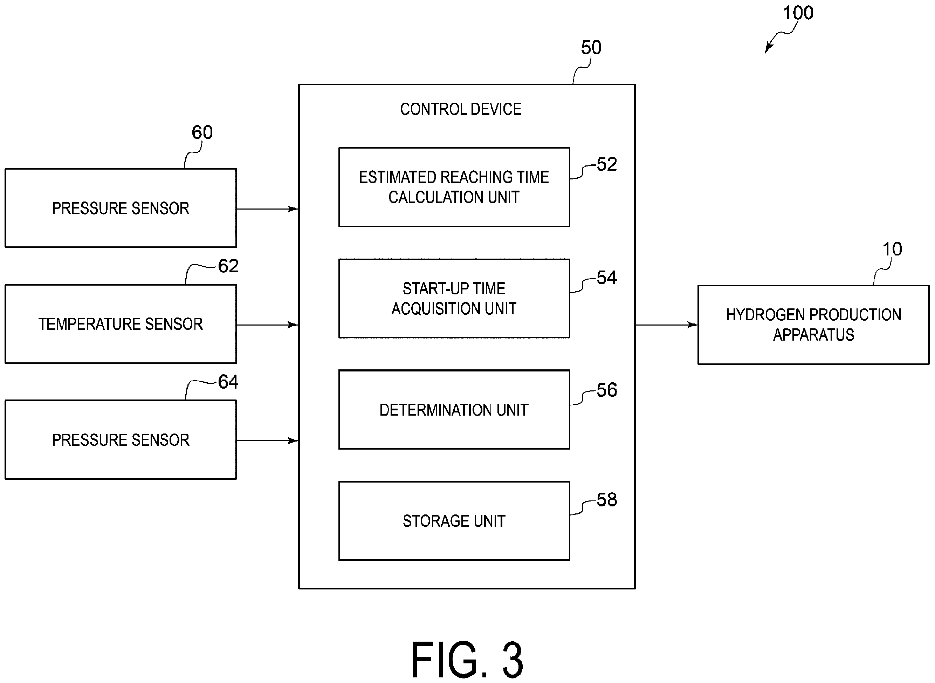

FIG. 3 is a schematic configuration diagram of a control device according to an embodiment. The control device 50 is configured to control the operation of the hydrogen production apparatus 10 on the basis of the measurement results by the pressure sensor 60, the temperature sensor 62, and/or the pressure sensor 64.

As illustrated in FIG. 3, the control device 50 includes an estimated reaching time calculation unit 52, a start-up time acquisition unit 54, and a determination unit 56. The control device 50 includes a storage unit 58.

The estimated reaching time calculation unit 52 is configured to calculate an estimated reaching time for the pressure of the storing unit 30 to reach a specified value with respect to a current time point on the basis of a change rate of the pressure of the storing unit 30. The change rate of the pressure of the storing unit 30 may be calculated on the basis of measured values of the pressure of the storing unit 30 acquired by the pressure sensor 60 at a plurality of time points.

The start-up time acquisition unit 54 is configured to acquire a start-up time of the hydrogen production apparatus 10 (a time required to start up the hydrogen production apparatus 10) corresponding to the state of the hydrogen production apparatus 10.

The start-up time acquisition unit 54 may acquire, on the basis of a state of the hydrogen production apparatus 10 at a present time point, a start-up time corresponding to the state on the basis of information indicating a correspondence relationship between the state of the hydrogen production apparatus 10 and the start-up time of the hydrogen production apparatus 10 which is stored in the storage unit 58 to be described below. Alternatively, when the hydrogen production apparatus 10 includes a water electrolyzer, the start-up time acquisition unit 54 may calculate a start-up time of the hydrogen production apparatus 10 on the basis of the temperature of the water in the electrolytic tank 12 and the pressure of the gas-liquid separator 14.

The determination unit 56 is configured to determine a start-up timing for starting up the hydrogen production apparatus 10 on the basis of a comparison between the estimated reaching time calculated by the estimated reaching time calculation unit 52 and the start-up time acquired by the start-up time acquisition unit 54. In one embodiment, the determination unit 56 may be configured to determine a start-up timing of the hydrogen production apparatus 10 on the basis of a comparison between the above-described estimated reaching time and the above-described start-up time and a preset specified start-up time.

The storage unit 58 is configured to store the information indicating a correspondence relationship between the state of the hydrogen production apparatus 10 and the start-up time of the hydrogen production apparatus 10. The storage unit 58 is configured to store the preset specified start-up time of the hydrogen production apparatus 10.

The state of the hydrogen production apparatus 10 described above may be one or more of a time elapsed from the end of a previous operation of the hydrogen production apparatus 10, a temperature of a component device of the hydrogen production apparatus 10, a pressure of a component device of the hydrogen production apparatus 10, and a temperature of the water (electrolyte solution or the like) in the electrolytic tank. It is conceivable that when the state of the hydrogen production apparatus 10 varies, the start-up time of the hydrogen production apparatus 10 also varies. The storage unit 58 may store a plurality of states of the hydrogen production apparatus 10 and a plurality of start-up times respectively corresponding to the plurality of states. The correspondence relationship between the state of the hydrogen production apparatus 10 and the start-up time of the hydrogen production apparatus 10 may be acquired in advance by operating the hydrogen production apparatus 10 in advance.

The control device 50 includes a computer including a processor (CPU or the like), a main storage device (a memory device; RAM or the like), an auxiliary storage device, an interface, and the like. The control device 50 is configured to receive signals from the pressure sensor 60, the temperature sensor 62, and/or the pressure sensor 64. The processor is configured to process the signals received in this manner. The processor is configured to process programs loaded in the main storage device. This achieves the functions of the estimated reaching time calculation unit 52, the start-up time acquisition unit 54, and the determination unit 56 described above. Note that the storage unit 58 described above may include the main storage device or the auxiliary storage device of the computer constituting the control device 50.

The processing contents of the control device 50 are implemented as programs to be executed by the processor. The programs may be stored in, for example, the auxiliary storage device. When the programs are executed, the programs are loaded in the main storage device. The processor is configured to read the programs from the main storage device and execute instructions included in the programs.

### Control Flow for Hydrogen Production Apparatus

Next, a control method for a hydrogen production apparatus according to some embodiments will be described. In the following description, a case in which the above-described hydrogen production apparatus 10 is controlled using the above-described control device 50 will be described. However, in some embodiments, a control method for a hydrogen production apparatus may be executed using another device, or a part or all of the procedure described below may be manually performed.

The control method for a hydrogen production apparatus described below is based on the premise that the hydrogen production apparatus is repeatedly started, operated (for hydrogen production), and stopped (that is, a hydrogen production facility is intermittently operated). Such operation method is performed in accordance with, for example, a demand for hydrogen, a power supply and demand situation, or the like.

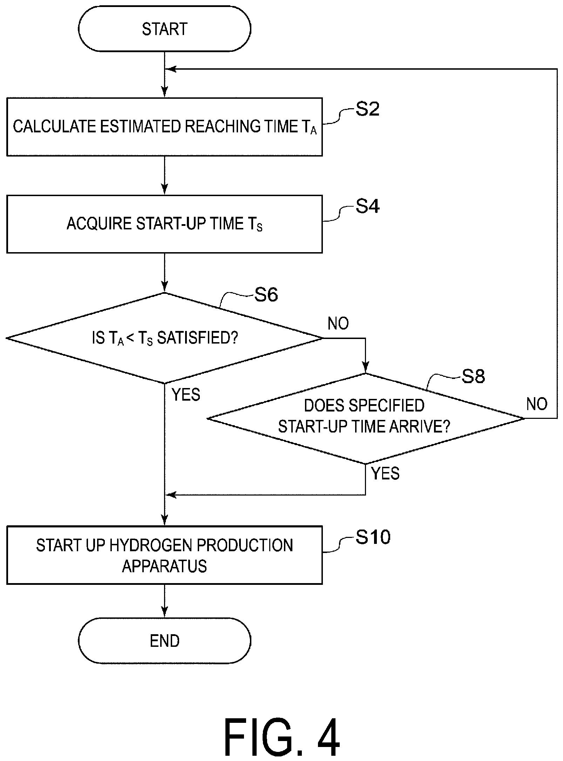

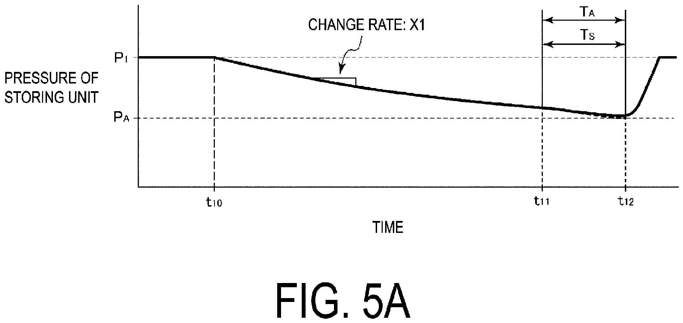

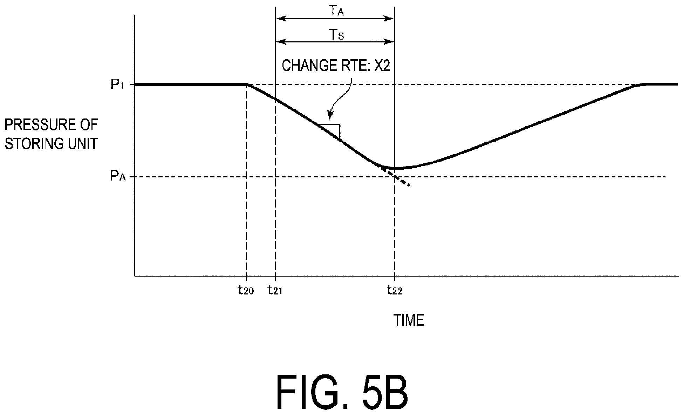

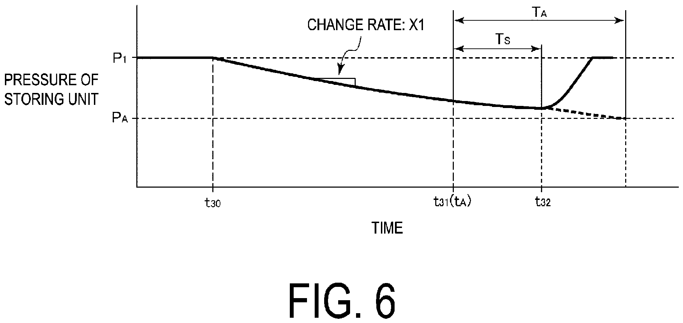

FIG. 4 is a flowchart of a control method for a hydrogen production apparatus according to an embodiment. FIG. 5A, FIG. 5B, and FIG. 6 are graphs each showing temporal change in pressure of a storing unit when a control method for a hydrogen production apparatus according to an embodiment is applied.

The method according to the flowchart of FIG. 4 is started in a state where the hydrogen production apparatus 10 is stopped. As illustrated in FIG. 4, in one embodiment, the estimated reaching time calculation unit 52 calculates an estimated reaching time T_{A} for the pressure of the storing unit 30 to reach a specified value P_{A} on the basis of a change rate of the pressure of the storing unit 30 (S2). Here, the change rate (decrease rate) of the pressure of the storing unit 30 during the stop of the hydrogen production apparatus 10 indicates an amount of hydrogen supplied from the storing unit 30 to the hydrogen consuming facility 40 or a hydrogen consumption rate in the hydrogen consuming facility 40. The specified value P_{A} is the pressure of the storing unit 30 that should be maintained to appropriately supply hydrogen from the storing unit 30 to the hydrogen consuming facility 40.

The change rate of the pressure of the storing unit 30 can be calculated, for example, by dividing a difference between pressures of the storing unit 30 at two time points different from each other by a length between the two time points. The pressure of the storing unit 30 can be acquired as a measured value by the pressure sensor 60. In the examples illustrated in FIG. 5A, FIG. 5B, and FIG. 6, after a time t10, t20, or t30, the pressure of the storing unit 30 decreases in association with the supply of hydrogen from the storing unit 30 to the hydrogen consuming facility 40, and the change rate of the pressure of the storing unit 30 is X1 in the examples illustrated in FIG. 5A and FIG. 6 and is X2 in the example illustrated in FIG. 5B.

For example, the estimated reaching time T_{A} can be calculated, using a pressure P of the storing unit 30 at a current time point (a time point at which the change rate of the pressure of the storing unit 30 is calculated) and a change rate X, as a length of time (T_{A} = (P - P_{A})/X) required to reach the specified pressure P_{A} (until the pressure decreases to the specified pressure P_{A}) from the current time point if the change rate is maintained.

Next, the start-up time acquisition unit 54 acquires a start-up time T_{S} of the hydrogen production apparatus 10 corresponding to the state of the hydrogen production apparatus 10 (S4). Here, the start-up time of the hydrogen production apparatus refers to a time from when the start-up of the hydrogen production apparatus in a stopped state is initiated until when the start-up of the hydrogen production apparatus is completed and the hydrogen production apparatus becomes capable of supplying hydrogen.

When the hydrogen production apparatus 10 includes a water electrolyzer (see FIG. 2), a start-up procedure of the hydrogen production apparatus is generally as follows. First, nitrogen gas is supplied to the gas-liquid separators 14 and 20 to increase the pressure, and then the nitrogen gas is discharged. By repeating this operation several times, the gas-liquid separators 14 and 20 are purged with the nitrogen gas. Next, a voltage is applied to the electrodes of the electrolytic tank 12 to start electrolysis of water. This starts the production of hydrogen, increases the pressure of the gas-liquid separators 14 and 20 and the like, and increases the temperature of the water. Then, the procedure waits until the pressure of the gas-liquid separator 14 or 20 rises to a predetermined value. Then, the procedure waits until the purity of the produced hydrogen increases. Other devices (for example, a dehumidifier for dehumidifying the hydrogen gas from the separator, a compressor for compressing the produced hydrogen gas, and the like) are started up. In this way, the hydrogen production apparatus 10 including the water electrolyzer is started up.

When the hydrogen production apparatus 10 includes a water electrolyzer (for example, see FIG. 2), in step S4, the start-up time T_{S} may be calculated on the basis of the temperature of the water in the water electrolyzer (the temperature of the electrolyte solution; that is, a temperature measured by the temperature sensor 62) and the pressure of the gas-liquid separator 14 or 20 (that is, a pressure measured by the pressure sensor 64). A correlation between the temperature of the water in the water electrolyzer (the temperature of the electrolyte solution) and the start-up time T_{S} and between the pressure of the gas-liquid separator 14 or 20 and the start-up time T_{S} (a function or the like indicating the correlation) may be acquired in advance by a test run or the like and stored in the storage unit 58. The start-up time acquisition unit 54 may acquire the correlation from the storage unit 58 and calculate the start-up time T_{S} from the correlation using a measured value of the temperature of the water in the water electrolyzer (the temperature of the electrolyte solution) and a measured value of the pressure of the gas-liquid separator 14 or 20. The temperature of the water in the water electrolyzer can be acquired as a measured value by the temperature sensor 62. The pressure of the gas-liquid separator 14 or 20 can be acquired as a measured value by the pressure sensor 64.

Alternatively, in step S4, the start-up time T_{S} corresponding to the current state of the hydrogen production apparatus 10 may be acquired on the basis of information indicating a correspondence relationship between the state of the hydrogen production apparatus 10 and the start-up time T_{S}.

The state of the hydrogen production apparatus 10 may include the temperature of the water (electrolyte solution) in the water electrolyzer (i.e., a temperature measured by the temperature sensor 62). For example, in a cold mode in which the temperature of the water (electrolyte solution) in the water electrolyzer is lower than a specified temperature, the temperature of the water (electrolyte solution) needs to be increased before the pressure is increased in starting up the hydrogen production apparatus 10, and thus the start-up time T_{S} of the hydrogen production apparatus 10 is longer than that in a hot mode in which the temperature of the water (electrolyte solution) in the electrolytic tank 12 is equal to or higher than the specified temperature. Accordingly, it is possible to associate different start-up times T_{S} (fixed values) with the temperature ranges of the water (electrolyte solution) in the water electrolyzer. That is, a correspondence relationship between the state of the hydrogen production apparatus 10 and the start-up time T_{S} can be defined.

The correspondence relationship between the state of the hydrogen production apparatus 10 and the start-up time T_{S} may be acquired in advance from measured values or the like during past operations of the hydrogen production apparatus 10, and information indicating the correspondence relationship may be stored in advance in the storage unit 58. The start-up time acquisition unit 54 may acquire the above-described information indicating the correspondence relationship from the storage unit 58 and acquire the start-up time T_{S} corresponding to a current state of the hydrogen production apparatus 10 from the correspondence relationship. The current state of the hydrogen production apparatus 10 may be acquired from a sensor (for example, the temperature sensor 62) provided at the hydrogen production apparatus 10.

Next, the determination unit 56 determines a start-up timing for starting up the hydrogen production apparatus 10 on the basis of a comparison between the estimated reaching time T_{A} calculated in step S2 and the start-up time T_{S} of the hydrogen production apparatus 10 acquired in step S4 (S6). In some embodiments, the determination unit 56 determines a start-up timing of the hydrogen production apparatus 10 on the basis of a preset specified start-up time t_{A}, in addition to the comparison (step S6) with the start-up time T_{S} of the hydrogen production apparatus 10 acquired in step S4 (S8).

In one embodiment, when the start-up time T_{S} of the hydrogen production apparatus 10 is longer than the estimated reaching time T_{A} in step S6 (i.e., T_{A} < T_{S}; Yes in step S6), the determination unit 56 determines that time point as a start-up timing of the hydrogen production apparatus 10 and initiates the start-up of the hydrogen production apparatus 10 (S10). In one embodiment, in a case where the start-up time T_{S} of the hydrogen production apparatus 10 is equal to or less than the estimated reaching time T_{A} (i.e., T_{A} ≥ T_{S}; No in step S6), when the preset specified start-up time arrives (Yest in step S8), the determination unit 56 determines that time point as a start-up timing of the hydrogen production apparatus 10 and initiates the start-up of the hydrogen production apparatus 10 (S10).

In a case where the start-up time T_{S} is equal to or shorter than the estimated reaching time T_{A} (i.e., T_{A} ≥ T_{S}) and the preset specified start-up time t_{A} has not arrived (No in step S6 and No in step S8), the procedure returns to step S2.

In the examples illustrated in FIG. 5A and FIG. 5B, the start-up time T_{S} of the hydrogen production apparatus 10 is equal to or shorter than the estimated reaching time T_{A} (No in step S6 and No in step S8) during a period from times t10 to t11 in FIG. 5A and during a period from times t20 to t21 in FIG. 5B, and thus the hydrogen production apparatus 10 is not started up. Then, the start-up time T_{S} of the hydrogen production apparatus 10 is longer than the estimated reaching time T_{A} (Yes in step S6) after a time t11 in FIG. 5A and after a time t21 in FIG. 5B, and thus the times t11 and t21 are determined as start-up timings of the hydrogen production apparatus 10, and the start-up of the hydrogen production apparatus 10 is initiated at the start-up timings (the times t11 and t21) (S10). As illustrated in FIG. 5A and FIG. 5B, the start-up of the hydrogen production apparatus 10 is completed and the supply of hydrogen is started at the times t11 and t21 at which a time period of the start-up time T_{S} has elapsed after the start-up of the hydrogen production apparatus 10 is initiated at the start-up timings (the times t12 and t22), and thus the pressure of the storing unit 30 in which produced hydrogen is stored starts increasing. Note that P1 in FIG. 5A, FIG. 5B, and FIG. 6 may be the maximum pressure of the storing unit 30 during the operation of the hydrogen production apparatus 10.

In the example illustrated in FIG. 6, a time t31 is set as the preset specified start-up time t_{A}. In the example illustrated in FIG. 6, the start-up time T_{S} of the hydrogen production apparatus 10 is equal to or shorter than the estimated reaching time T_{A} (No in step S6) during a period from times t30 to t31, and thus the hydrogen production apparatus 10 is not started up. When the preset specified start-up time t_{A} arrives at the time t31 (Yes in step S8), that time point (t_{A} = t31) is determined as a start-up timing of the hydrogen production apparatus 10, and the start-up of the hydrogen production apparatus 10 is initiated at this start-up timing (S10). As illustrated in FIG. 6, the start-up of the hydrogen production apparatus 10 is completed and the supply of hydrogen is started at a time t32 at which a time period of the start-up time T_{S} has elapsed after the start-up of the hydrogen production apparatus 10 is initiated at the start-up timing (t_{A} = t31), and thus the pressure of the storing unit 30 in which produced hydrogen is stored starts increasing.

In general, in order to stably supply hydrogen from a storing unit (storage header or the like) in which hydrogen produced by a hydrogen production apparatus is stored to a hydrogen consuming facility, it is necessary to maintain the pressure of the storing unit at a specified pressure P_{A} or higher. When the pressure of the storing unit becomes lower than the specified value, the hydrogen from the storing unit cannot be appropriately supplied to the hydrogen consuming facility.

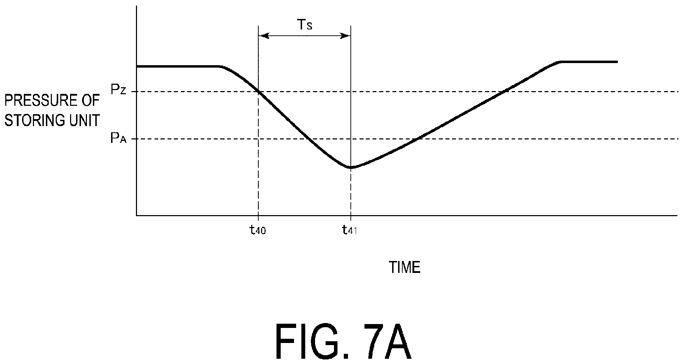

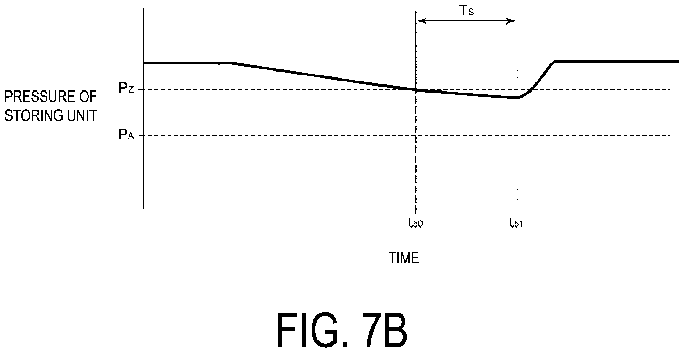

Here, in order to maintain the pressure of the storing unit at the specified pressure P_{A} or higher, it is conceivable to perform on-off operation of the hydrogen production apparatus on the basis of the pressure of the storing unit, that is, to start and operate the hydrogen production apparatus when the pressure of the storing unit becomes a predetermined value P_{Z} or lower, and to stop the operation of the hydrogen production apparatus when the pressure of the storing unit becomes the predetermined value P_{Z} or higher. Here, each of FIG. 7A and FIG. 7B is a graph showing an example of a temporal change in the pressure of the storing unit when the on-off operation of the hydrogen production apparatus is performed on the basis of the pressure of the storing unit. In FIG. 7A and FIG. 7B, T_{S} represents a time required to start up the hydrogen production apparatus.

As illustrated in FIG. 7A, assuming that the hydrogen consumption rate in the hydrogen consuming facility is high and the start-up of the hydrogen production apparatus is initiated at a time point (a time t40 in FIG. 7A) at which the pressure of the storing unit becomes equal to or lower than the predetermined value P_{Z}, the pressure of the storing unit falls below the specified pressure P_{A} before a time point (a time t41 in FIG. 7A) at which the start-up of the hydrogen production apparatus is completed, and hydrogen cannot be appropriately supplied to the hydrogen consuming facility. On the other hand, as illustrated in FIG. 7B, assuming that the hydrogen consumption rate in the hydrogen consuming facility is low and the start-up of the hydrogen production apparatus is initiated at a time point (a time t50 in FIG. 7B) at which the pressure of the storing unit becomes equal to or lower than the predetermined value P_{Z}, the pressure of the storing unit is not lowered so much at the completion of the start-up of the hydrogen production apparatus (i.e., at the start of hydrogen production; a time t51 in FIG. 7B), and thus the amount of hydrogen that can be produced per one operation (per one start-up) of the hydrogen production apparatus (the rise in the pressure of the storing unit) decreases, and the operation efficiency of the hydrogen production apparatus decreases.

In this regard, according to the control device 50 or the control method of the above-described embodiment, the start-up timing of the hydrogen production apparatus 10 is determined on the basis of the comparison between the estimated reaching time T_{A} calculated on the basis of the change rate of the pressure of the storing unit 30 and the start-up time T_{S} required to start up the hydrogen production apparatus 10. Thus, the start-up timing of the hydrogen production apparatus 10 can be determined in accordance with the consumption rate of hydrogen. This can achieve the appropriate supply of hydrogen and the efficient operation of the hydrogen production apparatus 10 in a compatible manner.

In some embodiments, as described above, a time point at which the start-up time T_{S} of the hydrogen production apparatus 10 becomes longer than the estimated reaching time T_{A} is determined as a start-up timing. This can determine, in accordance with the consumption rate of hydrogen, a start-up timing as late as possible to the extent that the start-up of the hydrogen production apparatus 10 can be completed before the pressure of the storing unit 30 becomes lower than the specified value P_{A}. As a result, the appropriate supply of hydrogen and the efficient operation of the hydrogen production apparatus 10 can be easily achieved in a compatible manner.

In some embodiment, as described above, a start-up timing of the hydrogen production apparatus 10 is determined on the basis of a comparison between the above-described estimated reaching time T_{A} and the above-described start-up time T_{S} and the preset specified start-up time t_{A}. This can start up the hydrogen production apparatus 10 at a start-up timing corresponding to the consumption rate of hydrogen or at a preset appropriate start-up timing. As a result, the appropriate supply of hydrogen and the efficient operation of the hydrogen production apparatus can be easily achieved in a compatible manner.

In some embodiments, as described above, when the start-up time T_{S} is equal to or shorter than the estimated reaching time T_{A}, the specified start-up time t_{A} is determined as a start-up timing. This can start up, even when the consumption rate of hydrogen is relatively low, the hydrogen production apparatus 10 at an appropriate timing and efficiently operate the hydrogen production apparatus 10. For example, by setting the specified start-up time described above at night during which an electric power load is low or during a time zone in which there is a surplus in electric power generated by regenerative energy, hydrogen can be efficiently produced by effectively using surplus electric power or the like.

On the premise that hydrogen stored in the storing unit 30 is consumed in the daytime and the hydrogen production apparatus 10 is operated at night to store hydrogen in the storing unit 30 (that is, the hydrogen production apparatus 10 is operated only at a specified time), the storing unit 30 needs to have a volume for covering all the maximum consumption, and thus a facility cost and an installation space increase. In this regard, in the above-described embodiment, since hydrogen production can be performed by operating the hydrogen production apparatus 10 while consuming the hydrogen stored in the storing unit 30, the volume of the storing unit 30 can be reduced. Accordingly, the increase in a facility cost and an installation space can be suppressed.

The content described in each of the above embodiments is understood as follows, for example.

(1) A control device (50) for a hydrogen production apparatus according to at least one embodiment of the present invention is a control device for controlling operation of a hydrogen production apparatus (10) and includes:
   an estimated reaching time calculation unit (52) configured to calculate, on the basis of a change rate of a pressure of a storing unit (30) for storing hydrogen produced by the hydrogen production apparatus, an estimated reaching time (T_{A}) for the pressure of the storing unit to reach a specified value;
   a start-up time acquisition unit (54) configured to acquire a start-up time (T_{S}) of the hydrogen production apparatus in accordance with a state of the hydrogen production apparatus; and
   a determination unit (56) configured to determine a start-up timing for starting up the hydrogen production apparatus on the basis of a comparison between the estimated reaching time and the start-up time.

When the pressure of the storing unit in which the hydrogen produced by the hydrogen production apparatus is stored becomes lower than the specified value, the hydrogen from the storing unit cannot be appropriately supplied to a hydrogen consuming facility. Here, the change rate of the pressure of the storing unit indicates a rate at which the hydrogen stored in the storing unit is consumed. In this regard, according to the configuration of (1) described above, the start-up timing of the hydrogen production apparatus is determined on the basis of a comparison between the estimated reaching time calculated on the basis of the change rate of the pressure of the storing unit and the start-up time of the hydrogen production apparatus corresponding to the state of the hydrogen production apparatus. Thus, the start-up timing of the hydrogen production apparatus can be determined in accordance with the consumption rate of hydrogen. This can achieve the appropriate supply of hydrogen and the efficient operation of the hydrogen production apparatus in a compatible manner.

(2) In some embodiments, in the configuration of (1) described above, the determination unit is configured to determine, as the start-up timing, a time point at which the start-up time becomes longer than the estimated reaching time.

According to the configuration of (2) described above, since a time point at which the above-described start-up time becomes longer than the above-described estimated reaching time is determined as the start-up timing, it is possible to determine, in accordance with the consumption rate of hydrogen, a start-up timing as late as possible to the extent that the start-up of the hydrogen production apparatus can be completed before the pressure of the storing unit becomes lower than the specified value. As a result, the appropriate supply of hydrogen and the efficient operation of the hydrogen production apparatus can be easily achieved in a compatible manner.

(3) In some embodiments, in the configuration of (1) or (2) described above, the determination unit is configured to determine the start-up timing on the basis of a comparison between the above-described estimated reaching time and the above-described start-up time and a specified start-up time preset (t_{A}).

According to the configuration of (3) described above, the start-up timing of the hydrogen production apparatus is determined on the basis of the comparison between the above-described estimated reaching time and the above-described start-up time and the preset specified start-up time. Accordingly, the hydrogen production apparatus can be started up at a start-up timing corresponding to the consumption rate of hydrogen or at a preset appropriate start-up timing. As a result, the appropriate supply of hydrogen and the efficient operation of the hydrogen production apparatus can be easily achieved in a compatible manner.

(4) In some embodiments, in the configuration of (3) described above, the determination unit is configured to determine the specified start-up time as the start-up timing when the start-up time is equal to or shorter than the estimated reaching time.

According to the configuration of (4) described above, since the specified start-up time is determined as the start-up timing when the start-up time is equal to or shorter than the estimated reaching time, even when the consumption rate of hydrogen is relatively low, the hydrogen production apparatus can be started up at an appropriate timing so that the hydrogen production apparatus can be operated efficiently. For example, by setting the specified start-up time described above at night during which an electric power load is low or during a time zone in which there is a surplus in electric power generated by regenerative energy, hydrogen can be efficiently produced by effectively using surplus electric power or the like.

(5) In some embodiments, in any one of the configurations of (1) to (4) described above, the hydrogen production apparatus further includes:
an electrolytic tank (12) configured to electrolyze water; and
a gas-liquid separator (14 or 20) to which hydrogen or oxygen generated by electrolysis of the water in the electrolytic tank is guided,
wherein the start-up time acquisition unit is configured to calculate the start-up time on the basis of a temperature of the water and a pressure of the gas-liquid separator in the hydrogen production apparatus.

According to the configuration of (5) described above, the start-up time of the hydrogen production apparatus corresponding to a state of the hydrogen production apparatus can be appropriately calculated on the basis of the temperature of the water (electrolyte solution or the like) and the pressure of the gas-liquid separator in the hydrogen production apparatus. Accordingly, the start-up timing of the hydrogen production apparatus can be appropriately determined on the basis of the comparison between the start-up time calculated in this way and the estimated reaching time described above.

(6) In some embodiments, in any one of the configurations of (1) to (4) described above,
the control device includes a storage unit (58) in which information indicating a correspondence relationship between a state of the hydrogen production apparatus and the start-up time is stored, and
the start-up time acquisition unit is configured to acquire, on the basis of the state of the hydrogen production apparatus, the start-up time in accordance with the state from the storage unit.

According to the configuration of (6) described above, on the basis of the state of the hydrogen production apparatus, the start-up time in accordance with the state is acquired from the storage unit. Accordingly, the start-up timing of the hydrogen production apparatus can be appropriately determined based on the comparison between the start-up time acquired in this way and the estimated reaching time described above.

(7) A hydrogen production facility (100) according to at least one embodiment of the present invention includes:
a hydrogen production apparatus (10);
a storing unit (30) for storing hydrogen produced by the hydrogen production apparatus; and
the control device (50) according to any one of (1) to (6) configured to control operation of the hydrogen production apparatus.

According to the configuration of (7) described above, the start-up timing of the hydrogen production apparatus is determined based on a comparison between the estimated reaching time calculated based on the change rate of the pressure of the storing unit and the start-up time required to start up the hydrogen production apparatus. Thus, the start-up timing of the hydrogen production apparatus can be determined in accordance with the consumption rate of hydrogen. This can achieve the appropriate supply of hydrogen and the efficient operation of the hydrogen production apparatus in a compatible manner.

(8) A control method for a hydrogen production apparatus according to at least one embodiment of the present invention is a control method for controlling operation of a hydrogen production apparatus (10) and includes:
a step (S2) of calculating, on the basis of a change rate of a pressure of a storing unit for storing hydrogen produced by the hydrogen production apparatus, an estimated reaching time (T_{A}) for the pressure of the storing unit (30) to reach a specified value;
a step (S4) of acquiring a start-up time (T_{S}) of the hydrogen production apparatus in accordance with a state of the hydrogen production apparatus; and
steps (S6, S10) of determining a start-up timing for starting up the hydrogen production apparatus on the basis of a comparison between the estimated reaching time and the start-up time.

According to the method of (8) described above, the start-up timing of the hydrogen production apparatus is determined based on the comparison between the estimated reaching time calculated based on the change rate of the pressure of the storing unit and the start-up time required to start up the hydrogen production apparatus. Thus, the start-up timing of the hydrogen production apparatus can be determined in accordance with the consumption rate of hydrogen. This can achieve the appropriate supply of hydrogen and the efficient operation of the hydrogen production apparatus in a compatible manner.

(9) A control program for a hydrogen production apparatus according to at least one embodiment of the present invention is a control program for controlling operation of a hydrogen production apparatus (10) and is configured to cause a computer to execute:
a step of calculating, on the basis of a change rate of a pressure of a storing unit for storing hydrogen produced by the hydrogen production apparatus, an estimated reaching time (T_{A}) for the pressure of the storing unit (30) to reach a specified value;
a step of acquiring a start-up time (T_{S}) of the hydrogen production apparatus in accordance with a state of the hydrogen production apparatus; and
a step of determining a start-up timing for starting up the hydrogen production apparatus on the basis of a comparison between the estimated reaching time and the start-up time.

According to the configuration of (9) described above, the start-up timing of the hydrogen production apparatus is determined based on a comparison between the estimated reaching time calculated based on the change rate of the pressure of the storing unit and the start-up time required to start up the hydrogen production apparatus. Thus, the start-up timing of the hydrogen production apparatus can be determined in accordance with the consumption rate of hydrogen. This can achieve the appropriate supply of hydrogen and the efficient operation of the hydrogen production apparatus in a compatible manner.

The embodiments of the present invention have been described above. However, the present invention is not limited to the above-described embodiments, and includes forms obtained by modifying the above-described embodiments and forms obtained by appropriately combining these forms.

In the present specification, an expression of a relative or absolute arrangement, such as "in a direction", "along a direction", "parallel", "orthogonal", "centered", "concentric", or "coaxial" shall not be construed as indicating the arrangement only in a strict literal sense, but also construed as expressing a state where the arrangement is relatively displaced by a tolerance, or by an angle or a distance to the extent that the same function can be achieved.

For example, an expression of a state where features are equal, such as "same", "equal", and "uniform" shall not be construed as indicating only a state where the features are equal in a strict literal sense, but also construed as expressing a state where there is a tolerance or a difference to the extent that the same function can be achieved.

In the present specification, an expression indicating a shape such as a rectangular shape or a cylindrical shape shall not be construed as indicating only a shape such as a rectangular shape or a cylindrical shape in a strict geometrical sense, but also construed as indicating a shape including a depression, a protrusion, a chamfered portion, or the like to the extent that the same effect can be achieved.

In the present specification, expressions such as "comprising", "including", or "having" one component are not intended as exclusive expressions that exclude the presence of other components.

### Reference Signs List

10 Hydrogen production apparatus
12 Electrolytic tank
13 Water supply line
14 Gas-liquid separator
15 Hydrogen gas line
16 Cathode-side line
18 Return line
20 Gas-liquid separator
21 Oxygen gas line
22 Anode-side line
24 Return line
30 Storing unit
40 Hydrogen consuming facility
50 Control device
52 Estimated reaching time calculation unit
54 Start-up time acquisition unit
56 Determination unit
58 Storage unit
60 Pressure sensor
62 Temperature sensor
64 Pressure sensor
100 Hydrogen production facility

## Claims

1. A control device for controlling operation of a hydrogen production apparatus, the control device comprising:
an estimated reaching time calculation unit configured to calculate, on the basis of a change rate of a pressure of a storing unit for storing hydrogen produced by the hydrogen production apparatus, an estimated reaching time for the pressure of the storing unit to reach a specified value;
a start-up time acquisition unit configured to acquire a start-up time of the hydrogen production apparatus in accordance with a state of the hydrogen production apparatus; and
a determination unit configured to determine a start-up timing for starting up the hydrogen production apparatus on the basis of a comparison between the estimated reaching time and the start-up time.

2. The control device for a hydrogen production apparatus according to claim 1, wherein the determination unit is configured to determine, as the start-up timing, a time point at which the start-up time becomes longer than the estimated reaching time.

3. The control device for a hydrogen production apparatus according to claim 1 or 2, wherein the determination unit is configured to determine the start-up timing on the basis of the comparison between the estimated reaching time and the start-up time and a specified start-up time preset.

4. The control device for a hydrogen production apparatus according to claim 3, wherein the determination unit is configured to determine the specified start-up time as the start-up timing when the start-up time is equal to or shorter than the estimated reaching time.

5. The control device for a hydrogen production apparatus according to claim 1 or 2, wherein
the hydrogen production apparatus includes
an electrolytic tank configured to electrolyze water and
a gas-liquid separator to which hydrogen or oxygen generated by electrolysis of the water in the electrolytic tank is guided, and
the start-up time acquisition unit is configured to calculate the start-up time on the basis of a temperature of the water and a pressure of the gas-liquid separator in the hydrogen production apparatus.

6. The control device for a hydrogen production apparatus according to claim 1 or 2, comprising
a storage unit in which information indicating a correspondence relationship between a state of the hydrogen production apparatus and the start-up time is stored, wherein
the start-up time acquisition unit is configured to acquire, on the basis of the state of the hydrogen production apparatus, the start-up time in accordance with the state from the storage unit.

7. A hydrogen production facility, comprising:
a hydrogen production apparatus;
a storing unit for storing hydrogen produced by the hydrogen production apparatus; and
the control device according to claim 1 or 2 configured to control operation of the hydrogen production apparatus.

8. A control method for controlling operation of a hydrogen production apparatus, the control method comprising:
a step of calculating, on the basis of a change rate of a pressure of a storing unit for storing hydrogen produced by the hydrogen production apparatus, an estimated reaching time for the pressure of the storing unit to reach a specified value;
a step of acquiring a start-up time of the hydrogen production apparatus in accordance with a state of the hydrogen production apparatus; and
a step of determining a start-up timing for starting up the hydrogen production apparatus on the basis of a comparison between the estimated reaching time and the start-up time.

9. A control program for controlling operation of a hydrogen production apparatus, the control program causing a computer to execute:
a step of calculating, on the basis of a change rate of a pressure of a storing unit for storing hydrogen produced by the hydrogen production apparatus, an estimated reaching time for the pressure of the storing unit to reach a specified value;
a step of acquiring a start-up time of the hydrogen production apparatus in accordance with a state of the hydrogen production apparatus; and
a step of determining a start-up timing for starting up the hydrogen production apparatus on the basis of a comparison between the estimated reaching time and the start-up time.
